# FASCICULE DE BREVET EUROPEEN

(11) **EP 2 780 192 B1**
(45) Date de publication et mention de la délivrance du brevet: **29.03.2017**
(21) Numéro de dépôt: 12781316.0
(22) Date de dépôt: 05.11.2012
(51) Int. Cl.: B60N 2/20, B60N 3/00

(54) **SIEGE DE VEHICULE DOTE DE MOYENS DE FIXATION D'UNE TABLETTE AMOVIBLE**
FAHRZEUGSITZ MIT VORRICHTUNG ZUM BEFESTIGEN EINER ABNEHMBAREN ABLAGE
VEHICLE SEAT PROVIDED WITH MEANS FOR ATTACHING A REMOVABLE TRAY

(30) Priorité: 16.11.2011 FR 1160413
(43) Date de publication de la demande: 24.09.2014
(73) Titulaire: Renault S.A.S., 92100 Boulogne-Billancourt (FR)
(72) Inventeur: ROUXEL, Yves, F-78000 Versailles (FR); FOLLIOT, Herve, F-78580 Maule (FR)
(86) Numéro de dépôt international: PCT/EP2012/071838
(87) Numéro de publication internationale: WO 2013/072210

(56) Documents cités:
- EP-A2- 1 366 951
- FR-A1- 2 911 548
- FR-A3- 2 924 387
- GB-A- 2 424 575
- US-A1- 2002 060 481
- US-B1- 6 382 745
- US-B1- 6 702 375

## Description

L'invention se rapporte à un siège de véhicule équipé de moyens de fixation d'une tablette amovible. Les sièges de véhicule sont des éléments incontournables et imposants dans un habitacle de véhicule, et il peut alors s'avérer intéressant des les aménager afin qu'ils puissent assurer des fonctions supplémentaires, tout en conservant un encombrement sensiblement constant. Un siège de véhicule selon l'invention a été modifié par rapport à un siège conventionnel, afin de remplir une fonction nouvelle.

Les sièges de véhicule dotés d'une tablette existent et ont déjà fait l'objet de brevet. On peut par exemple citer le brevet FR2911548, qui se rapporte à un siège de véhicule dont la face arrière du dossier est dotée d'une tablette mobile. Plus spécifiquement, une fois que le dossier a été replié sur l'assise, la tablette se retrouve dans une position sensiblement horizontale, et peut pivoter autour d'un axe vertical afin de pouvoir se déporter latéralement d'un coté ou de l'autre du siège. Bien que fonctionnelle et ergonomique au niveau de sa fonction de support, cette tablette est reliée en permanence au siège, sans pouvoir être dissociée de celui-ci, et sans pouvoir être utilisée à un emplacement différent de celui de son rangement sur le dossier dudit siège.

Un siège de véhicule selon l'invention possède un dossier rabattable, équipé de moyens de fixation destinés à arrimer une tablette dans une position dressée. En effet, une fois replié, le dossier du siège se retrouve dans une position sensiblement horizontale, et peut servir de plateforme de support à une tablette, dans une position opérationnelle pour une personne assise sur un siège voisin. Les moyens de fixation, qui sont propres au dossier du siège, coopèrent avec la tablette pour que celle-ci demeure de façon inamovible, dans une position érigée donnée. Une tablette en position opérationnelle et une tablette qui peut, soit être facilement lue si un texte ou des figures étaient visibles sur celle-ci, ou qui peut servir de support à un document papier sur lequel il serait possible d'écrire.

L'invention a pour objet un siège de véhicule automobile comprenant une assise et un dossier repliable comportant une face arrière apte à se retrouver dans une position sensiblement horizontale une fois que ledit dossier a été rabattu. La principale caractéristique technique d'un siège selon l'invention, est que la face arrière du dossier est dotée de moyens de fixation aptes à coopérer avec une tablette indépendante, afin de la maintenir dans une position dressée sur ladite face arrière une fois que le dossier a été rabattu. De cette manière, le dossier du siège occupe une fonction supplémentaire de support à une tablette, une fois que le dossier a été rabattu. L'expression « sensiblement horizontale » signifie « horizontale », à plus ou moins 5°. Une tablette indépendante est une tablette qui n'est pas reliée de façon permanente à la face arrière du dossier du siège. Cette tablette est amenée en tant qu'objet dissocié du siège, au niveau des moyens de fixation pour être arrimée de façon inamovible sur la face arrière du dossier. La tablette peut représenter une multitude d'objets, comme par exemple, une console de jeu, un ordinateur portable, ou un support de document papier. Une position dressée est une position pour laquelle un individu assis sur un siège voisin dans le véhicule, pourrait aisément lire un texte ou regarder des figures ou des photos sur ladite tablette, dans de bonnes conditions de confort et d'ergonomie, sans avoir à incliner la tête de façon exagérée. La tablette est fixée de façon suffisamment stable et solide sur ladite face arrière, pour qu'un individu puisse écrire sur des feuilles de papier apposées sur ladite tablette, ou puisse exercer une pression sur un écran tactile de tablette informatique afin de déclencher une fonction particulière. Les moyens de fixation peuvent coopérer avec des moyens complémentaires de fixation de la tablette, ou bien coopérer directement avec ladite tablette.

Avantageusement, la position dressée est une position qui peut être, soit verticale, soit inclinée, mais qui n'est pas horizontale. Autrement dit, la position de la tablette est sensiblement analogue à la position inclinée d'un ouvrage écrit, qu'un individu tiendrait à la main, et qu'il lirait en étant assis, dans une position confortable.

De façon préférentielle, les moyens de fixation comprennent au moins une rainure permettant de recevoir la tablette et la maintenir dans une position dressée sur la face arrière du dossier. Il est supposé que la largeur de la rainure est compatible avec l'épaisseur de la tablette afin que celle-ci puisse venir s'y loger partiellement. Les rainures peuvent indifféremment être pratiquées au niveau du centre du dossier ou au niveau de sa partie extrême pouvant servir d'appui-tête. A chaque rainure correspond une position particulière de la tablette, l'objectif étant d'orienter la tablette vers un siège voisin. Chaque rainure peut être rectiligne ou curviligne. Ce type de moyens de fixation est particulièrement peu encombrant, car la plateforme support est constituée par le dossier du siège déjà présent dans le véhicule, et que chaque rainure remplace avantageusement une pièce d'interface volumineuse pouvant servir à la fixation de la tablette dans sa position dressée. De même, pour cette configuration, il n'est pas nécessaire que la tablette soit dotée de moyens de fixation complémentaires aptes à coopérer avec les moyens de fixation du dossier de siège. Ce moyen de fixation est simple, peu encombrant et pleinement efficace.

Préférentiellement, la face arrière du dossier comporte quatre rainures, deux rainures étant alignées suivant un premier axe et les deux autres rainures étant alignées selon un deuxième axe, deux rainures d'un même axe servant à fixer la tablette dans une position donnée. Avec cette configuration à quatre rainures, la tablette peut ainsi occuper deux positions distinctes sur le siège replié.

De façon avantageuse, les deux axes se croisent, les deux rainures d'un même axe étant positionnées de par et d'autre du point d'intersection fictif entre lesdits axes. De cette manière, une première position de la tablette se déduit de la seconde position, par une rotation fictive autour du point d'intersection entre les deux axes. La tablette peut ainsi être orientée selon deux positions distinctes sur le dossier replié, au moyen d'un simple pivotement sur elle-même, ladite tablette devant être préalablement retirée des rainures qu'elle occupe pour subir ledit pivotement.

Avantageusement, chaque rainure est occultée par un élément précontraint, la tablette venant s'enclencher dans chaque rainure en repoussant ledit élément. Chaque élément a tendance à occulter naturellement une rainure, et la tablette est doit être manipulée pour écarter chacun desdits éléments, au moment où elle pénètre dans chacune desdites rainures. Une fois qu'elle se retrouve dans sa position définitive, chaque élément contribue à verrouiller cette position en exerçant une pression contre ladite tablette. Cet élément précontraint, en exerçant une pression sur la tablette, permet d'éviter à celle-ci de devoir être enfoncée trop profondément dans chaque rainure afin d'obtenir la stabilité exigée. Il est à préciser que chaque élément précontraint est écarté naturellement de chaque rainure au moment où la tablette pénètre dans lesdites rainures, ne nécessitant ainsi aucun effort particulier.

Selon un mode de réalisation préféré selon l'invention, les moyens de fixation sont conformés pour arrimer une tablette servant de support à un document papier, et possédant une pince de maintien dudit document. Cette tablette peut ainsi servir à la fixation d'une ou plusieurs feuilles de papier par l'intermédiaire de la pince. Les moyens de fixation sont suffisamment solides pour permettre, non seulement de maintenir la tablette dans une position dressée, mais également à ladite tablette de résister à la pression exercée par un stylo ou un crayon tenu par un individu en train d'écrire sur un document papier fixé sur ladite tablette.

De façon préférentielle, la tablette est rangée dans le dossier dudit siège lorsqu'elle est en mode de stockage. De cette manière, le siège permet d'assurer pleinement et à lui tout seul une double prestation, qui est, d'une part, de stocker la tablette dans une position rangée, et d'autre part, de permettre la fixation de ladite tablette dans une position fonctionnelle.

L'invention se rapporte enfin à un véhicule comportant une rangée d'au moins deux sièges, et dont la principale caractéristique technique est qu'il comprend au moins un siège conforme à l'invention.

Selon un mode de réalisation préféré d'un véhicule selon l'invention, ledit véhicule comporte une rangée de trois sièges, dont le siège central est conforme à l'invention. De cette manière, une fois que le dossier du siège central a été replié, la tablette peut être retirée par l'un des deux occupants des deux sièges voisins, et être dressée sur le dossier replié en étant orientée vers l'un desdits sièges voisins. Le conducteur ou le passager peut ainsi bénéficier de cette tablette.

Les sièges selon l'invention présentent l'avantage d'être d'un encombrement constant par rapport à un siège conventionnel déjà existant, tout en proposant une prestation complète liée à la tablette. En effet, ils permettent à la fois de fixer la tablette dans une position opérationnelle pour laquelle un individu peut lire un texte sur ladite tablette de façon confortable et agréable, et d'offrir un espace de rangement pour ladite tablette en mode de stockage. Ils ont de plus l'avantage de faire intervenir un minimum de pièces pour maintenir la tablette rangée dans le dossier et pour la dresser en position fonctionnelle sur le dossier, les rendant donc faciles à fabriquer, peu encombrants et d'un coût modéré.

On donne ci-après, une description détaillée d'un mode de réalisation préféré d'un siège selon l'invention, en se référant aux figures 1 à 4.
- La figure 1 est une vue en perspective de derrière d'un siège selon l'invention dans une position fonctionnelle,
- La figure 2 est une vue en perspective du siège de la figure 2, dans une position repliée, la tablette étant rangée dans le dossier,
- La figure 3 est la vue de la figure 2, la tablette étant dressée sur le siège replié,
- La figure 4 est une vue partielle en perspective de l'intérieur d'u véhicule selon l'invention,

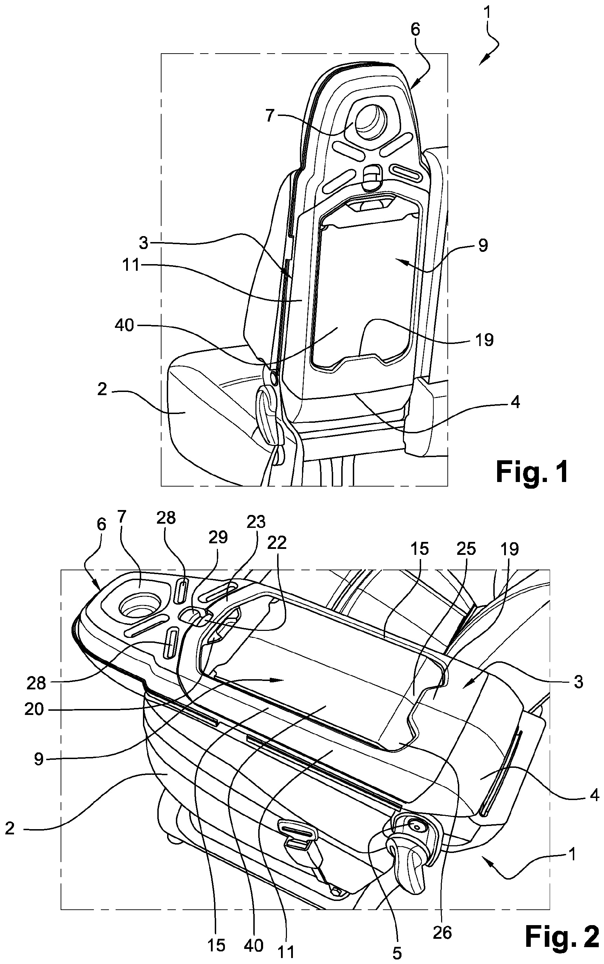

En se référant aux figure 1 et 2, un siège 1 selon l'invention comprend conventionnellement une assise 2 et un dossier 3 apte à pivoter entre une position fonctionnelle pour laquelle il est dressé sur l'assise 2, comme le montre la figure 1, et une position repliée, sensiblement horizontale, pour laquelle il vient au contact de l'assise, comme le montre la figure 2. Le dossier 3 possède ainsi une première extrémité 4 proche de l'assise 2, et montée pivotante autour d'un axe 5 horizontal et transversal, et une deuxième extrémité 6 correspondant à un appui-tête 7. Il est supposé qu'un axe longitudinal du dossier 3 relie la première extrémité et la deuxième extrémité 4,6. Le dossier 3 comporte une face arrière dans laquelle est rangée une tablette 9 munie d'une pince 27, ladite tablette 9 étant plane et de faible épaisseur, et étant disposée sur ladite face arrière en assurant une certaine continuité au niveau de l'enveloppe extérieure du siège 1.

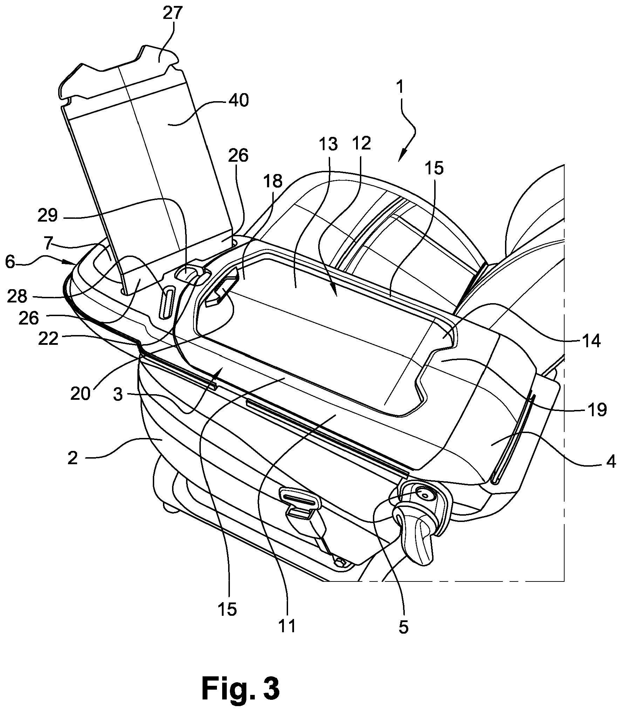

En se référant à la figure 3, le dossier 3 comporte un emplacement dans lequel est fixé de façon inamovible un cadre 11 de réception de forme approximativement rectangulaire, dont l'épaisseur est inférieure à celle du dossier 3, dont la largeur est identique à celle du dossier 3 et dont la longueur est inférieure à celle du dossier 3. De cette manière, le cadre 11 est inclus dans le dossier 3 tout en délimitant partiellement sa largeur. Ce cadre 11 comprend un évidement 12 présentant un fond plan 13 prolongé par un renfoncement 14. La partie de l'évidement 12 correspondant au fond plan 13 est délimitée par deux grands segments 15 parallèles, par un petit segment 16 perpendiculaire auxdits grands segments 15, et par un segment profilé 17 permettant à l'évidement 12 de posséder un allongement central 18. Le renfoncement 14 se traduit par un fond incliné dans un sens qui accentue la hauteur dudit évidement 12, ledit fond incliné étant en continuité du fond plan 13 au niveau de son petit segment 15. Le cadre 11 possède une avancée 19 centrale de matière surplombant le renfoncement 14, ladite avancée 19 étant placée au droit dudit renfoncement 14, sans empiéter sur la partie de l'évidement 14 à fond plan 13. L'évidement 12 s'étend selon un axe longitudinal du dossier 3, de sorte que son allongement central 18 est situé à proximité de l'appui-tête 7, et de sorte que le renfoncement 14 se retrouve à proximité de l'axe 5 de rotation du dossier 3 sur l'assise 2. Le cadre 11 peut être retiré du dossier 3 au moyen d'une pression sur un plot 22, émergeant d'un bord 23 dudit cadre 11. Un mécanisme de blocage impliquant une butée mécanique est placé dans le cadre 11 de réception, au niveau de l'allongement central 18 de l'évidement 12, ledit mécanisme comprenant un bouton poussoir 20 d'actionnement, émergeant de l'évidement 12, entre un bord 23 d'extrémité dudit cadre 11 délimitant l'allongement central 18 de l'évidement 12, et la tablette 9.

En se référant aux figures 2 et 3, la tablette 9 est constituée par une plaque 40 plane de faible épaisseur, et de forme sensiblement rectangulaire, ladite plaque 40 étant prolongée selon un axe longitudinal par, d'une part, un rebord incliné 25 présentant deux lobes 26 latéraux, et d'autre part, une pince 27 de serrage conventionnelle, conçue pour maintenir au moins une feuille de papier contre la plaque 40. Cette tablette 9 sert donc de support à un document papier pour qu'une personne puisse lire ledit document ou puisse écrire dessus.

En se référant à la figure 2, en position de rangement, la tablette 9 occupe l'évidement 12, de manière à ce que son rebord incliné 25 se retrouve dans le renfoncement 24, les deux lobes 26 étant placés de par et d'autre de l'avancée centrale 19 du cadre 11, et de sorte que la plaque 40 soit au contact du fond plan 13 de l'évidement 12, l'extrémité de la plaque 40 comportant la pince 27 coopérant avec le mécanisme de blocage. La tablette 9 est rangée dans le dossier 3 sans qu'aucune de ses parties n'émerge de l'évidement 12, ladite tablette 9 assurant une certaine continuité de surface, au niveau de la face arrière dudit dossier 3. Lorsque la tablette 9 est rangée dans le cadre 11 de réception de la face arrière du dossier 3, le bouton poussoir 20 d'actionnement demeure accessible depuis l'extérieur du siège 1. Un élément de rappel est associé à ce bouton-poussoir 20 pour que celui-ci demeure, par défaut, dans une position en saillie en configuration de blocage. Ainsi, en l'absence de toute pression sur ledit bouton-poussoir 20, la tablette 9 se retrouve par défaut bloquée contre le dossier 3 du siège 1. La face arrière du dossier 3 correspondant à l'appui-tête 7 comprend quatre rainures 28 disposées en croix, deux rainures 28 étant alignées sur un premier axe, et les deux autres rainures 28 étant alignée sur un deuxième axe, lesdits axes se croisant, chaque rainure 28 d'un même axe étant située de chaque coté du point d'intersection fictif desdits axes. Chaque rainure 28 est matérialisée par une fente rectiligne de longueur finie, et qui est obturée par un élément amovible précontraint, chacun desdits éléments étant connecté à un bouton poussoir secondaire 29 placé à proximité du bouton-poussoir 20 d'actionnement. Chaque élément d'obturation occulte naturellement la rainure 28, une pression sur le bouton poussoir secondaire 29 entrainant le retrait momentané dudit élément pour libérer la rainure 28 afin d'y faire pénétrer la tablette 9.

En se référant à la figure 3, une fois que la tablette 9 a été retirée du dossier 3, elle peut être dressée sur ledit dossier 3 replié, au niveau des rainures 28. En effet, deux rainures 28 alignées sont destinées à recevoir les deux lobes 26 de la tablette 9 afin que celle-ci occupe une première position, les deux autres rainures 28 alignées permettant à ladite tablette 9 d'occuper une deuxième position. La tablette 9 peut ainsi être dressée sur le siège 1 replié de façon à se retrouver dans un plan légèrement incliné par rapport à un plan vertical, la pince 27 matérialisant sa zone la plus élevée.

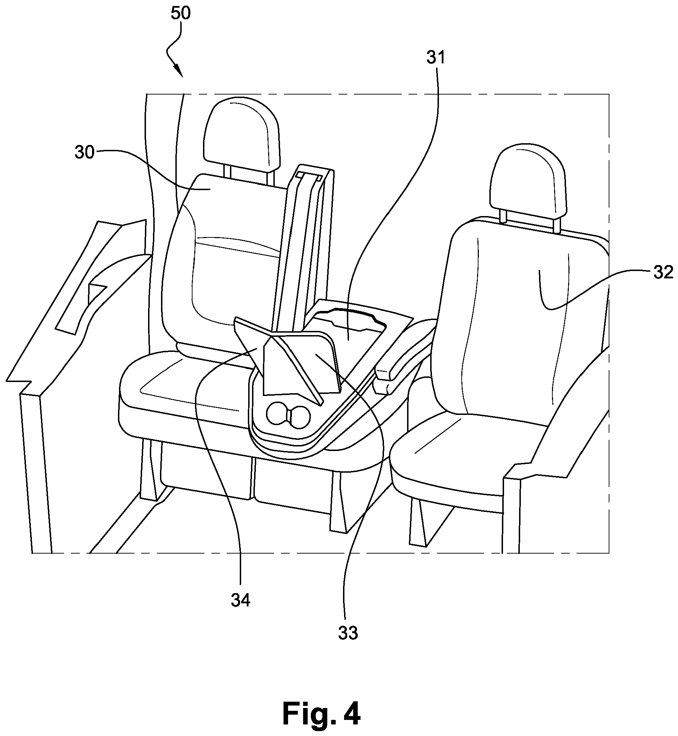

En se référant à la figure 4, un véhicule 50 automobile selon l'invention comprend une rangée de trois sièges 30, 31, 32 alignés, dont le siège central 31 est conforme au siège 1 précédemment décrit. La tablette 9 peut ainsi occuper une première position 33 orientée vers un premier siège 30 voisin, ou une deuxième position 34 orientée vers un autre siège voisin 32. Afin de lever toute ambigüité, la figure 4 matérialise la tablette 9 dans deux positions distinctes, qu'elle ne peut pas occuper simultanément, et non pas une seule tablette de forme complexe.

La mise en place d'une tablette 9 dans une position dressée sur le dossier 3 replié, à partir de sa position rangée à l'arrière du dossier 3, suit les étapes suivantes. Une pression sur le bouton-poussoir d'actionnement 20, libère la tablette 9, qui est retirée de l'évidement 12 au moyen d'un pivotement de ladite tablette 9 autour de ses deux lobes 26 placés dans le renfoncement 24 dudit évidement 12. La tablette 9 est amenée au dessus des deux rainures alignées 28 correspond à la position souhaitée. Une pression sur le bouton-poussoir 29 secondaire libère les rainures 28, et la tablette 9 est enfoncée dans lesdites rainures 28 au niveau de ses deux lobes 26. Un relâchement du bouton-poussoir secondaire 29 permet de verrouiller la tablette 9 dans les rainures 28 grâce aux éléments précontraints qui exercent une pression contre la tablette 9. Pour faire passer la tablette 9 de sa position dressée à sa position rangée, une pression sur le bouton poussoir secondaire 29 libère les rainures 28, et la tablette 9 peut alors être retirée desdites rainures 28. La tablette 9 est alors insérée dans l'évidement du cadre 11 de réception, en faisant d'abord pénétrer ses deux lobes 26 dans le renfoncement 24. La tablette 9 subit alors une rotation pour être amenée au contact du fond de l'évidement 12. Simultanément, une pression sur le bouton-poussoir d'actionnement 20 libère le mécanisme de blocage pour permettre l'insertion complète de la tablette 9 dans l'évidement 12. La pression sur ledit bouton 20 est alors relâchée pour verrouiller la tablette 9 dans sa position de rangement derrière le dossier 3.

## Revendications

1. Siège (1) de véhicule automobile comprenant une assise (2) et un dossier (3) repliable comportant une face arrière apte à se retrouver dans une position sensiblement horizontale une fois que ledit dossier (3) a été rabattu, **caractérisé en ce que** la face arrière du dossier (3) est dotée de moyens (28) de fixation aptes à coopérer avec une tablette (9) indépendante, afin de la maintenir dans une position dressée sur ladite face arrière une fois que le dossier (3) a été rabattu.

2. Siège de véhicule selon la revendication 1, **caractérisé en ce que** la position dressée est une position qui peut être, soit verticale, soit inclinée, mais qui n'est pas horizontale.

3. Siège de véhicule selon l'une quelconque des revendications 1 ou 2, **caractérisé en ce que** les moyens de fixation comprennent au moins une rainure (28) permettant de recevoir la tablette (9) et la maintenir dans une position dressée sur la face arrière du dossier (3).

4. Siège de véhicule selon la revendication 3, **caractérisé en ce que** la face arrière du dossier (2) comporte quatre rainures (28), deux rainures (28) étant alignées suivant un premier axe et les deux autres rainures (28) étant alignées selon un deuxième axe, et **en ce que** deux rainures (28) d'un même axe servent à fixer la tablette (9) dans une position donnée.

5. Siège de véhicule selon la revendication 4, **caractérisé en ce que** les deux axes se croisent, les deux rainures (28) d'un même axe étant positionnées de par et d'autre du point d'intersection fictif entre lesdits axes.

6. Siège de véhicule selon l'une quelconque des revendications 3 à 5, **caractérisé en ce que** chaque rainure (28) est occulté par un élément précontraint, la tablette (9) venant s'enclencher dans chaque rainure (28) en repoussant ledit élément.

7. Siège de véhicule selon l'une quelconque des revendications 1 à 6, **caractérisé en ce que** les moyens de fixation (28) sont conformés pour arrimer une tablette (9) servant de support à un document papier et possédant une pince (27) de maintien dudit document.

8. Siège de véhicule selon l'une quelconque des revendications 1 à 7, **caractérisé en ce que** la tablette (9) est rangée dans le dossier (3) dudit siège (1) lorsqu'elle est en mode de stockage.

9. Véhicule (50) comportant une rangée d'au moins deux sièges (30, 31, 32), **caractérisé en ce qu'**il comprend au moins un siège (1) conforme à l'une quelconque des revendications 1 à 8.

10. Véhicule selon la revendication 9, **caractérisé en ce qu'**il comporte une rangée de trois sièges (30, 31, 32), dont le siège central (31) est conforme à l'une quelconque des revendications 1 à 8.

## Patentansprüche

1. Kraftfahrzeugsitz (1), welcher ein Sitzteil (2) und eine klappbare Rückenlehne (3), welche eine Hinterseite aufweist, die sich in einer im Wesentlichen horizontalen Position befinden kann, wenn die Rückenlehne (3) heruntergeklappt worden ist, umfasst, **dadurch gekennzeichnet, dass** die Hinterseite der Rückenlehne (3) mit Befestigungsmitteln (28) ausgestattet ist, die geeignet sind, mit einer unabhängigen Tafel (9) zusammenzuwirken, um sie in einer aufgerichteten Position auf der Hinterseite zu halten, wenn die Rückenlehne (3) heruntergeklappt worden ist.

2. Fahrzeugsitz nach Anspruch 1, **dadurch gekennzeichnet, dass** die aufgerichtete Position eine Position ist, welche entweder vertikal oder geneigt sein kann, welche jedoch nicht horizontal ist.

3. Fahrzeugsitz nach einem der Ansprüche 1 oder 2, **dadurch gekennzeichnet, dass** die Befestigungsmittel wenigstens einen Schlitz (28) umfassen, der es ermöglicht, die Tafel (9) aufzunehmen und sie in einer aufgerichteten Position auf der Hinterseite der Rückenlehne (3) zu halten.

4. Fahrzeugsitz nach Anspruch 3, **dadurch gekennzeichnet, dass** die Hinterseite der Rückenlehne (2) vier Schlitze (28) aufweist, wobei zwei Schlitze (28) entlang einer ersten Achse ausgerichtet sind und die zwei anderen Schlitze (28) entlang einer zweiten Achse ausgerichtet sind, und dadurch, dass zwei Schlitze (28) ein und derselben Achse dazu dienen, die Tafel (9) in einer gegebenen Position zu befestigen.

5. Fahrzeugsitz nach Anspruch 4, **dadurch gekennzeichnet, dass** sich die zwei Achsen schneiden, wobei die zwei Schlitze (28) ein und derselben Achse beiderseits des fiktiven Schnittpunkts zwischen den Achsen positioniert sind.

6. Fahrzeugsitz nach einem der Ansprüche 3 bis 5, **dadurch gekennzeichnet, dass** jeder Schlitz (28) von einem vorgespannten Element verdeckt wird, wobei die Tafel (9) in jeden Schlitz (28) einrastet, indem sie dieses Element zurückschiebt.

7. Fahrzeugsitz nach einem der Ansprüche 1 bis 6, **dadurch gekennzeichnet, dass** die Befestigungsmittel (28) dafür ausgebildet sind, eine Tafel (9) zu befestigen, die als Stütze für ein Papierdokument dient und eine Klemme (27) zum Festhalten des Dokuments besitzt.

8. Fahrzeugsitz nach einem der Ansprüche 1 bis 7, **dadurch gekennzeichnet, dass** die Tafel (9) in der Rückenlehne (3) des Sitzes (1) verstaut ist, wenn sie sich im Aufbewahrungszustand befindet.

9. Fahrzeug (50), welches eine Reihe von wenigstens zwei Sitzen (30, 31, 32) aufweist, **dadurch gekennzeichnet, dass** es wenigstens einen Sitz (1) umfasst, der gemäß einem der Ansprüche 1 bis 8 ausgebildet ist.

10. Fahrzeug nach Anspruch 9, **dadurch gekennzeichnet, dass** es eine Reihe von drei Sitzen (30, 31, 32) aufweist, von denen der mittlere Sitz (31) gemäß einem der Ansprüche 1 bis 8 ausgebildet ist.

## Claims

1. Seat (1) of a motor vehicle comprising a seat member (2) and a foldable backrest (3) comprising a rear face which is capable of being in a substantially horizontal position once said backrest (3) has been folded down, **characterized in that** the rear face of the backrest (3) is provided with fixing means (28) which are capable of cooperating with an independent tray (9) in order to retain it in a deployed position on said rear face once the backrest (3) has been folded down.

2. Vehicle seat according to Claim 1, **characterized in that** the deployed position is a position which may be either vertical or inclined but which is not horizontal.

3. Vehicle seat according to either of Claims 1 and 2, **characterized in that** the fixing means comprise at least one groove (28) which allows the tray (9) to be received and retained in a deployed position on the rear face of the backrest (3).

4. Vehicle seat according to Claim 3, **characterized in that** the rear face of the backrest (2) comprises four grooves (28), two grooves (28) being aligned in accordance with a first axis and the other two grooves (28) being aligned in accordance with a second axis, and **in that** two grooves (28) of the same axis are used to fix the tray (9) in a given position.

5. Vehicle seat according to Claim 4, **characterized in that** the two axes intersect each other, the two grooves (28) of the same axis being positioned at one side and the other of the notional intersection location between said axes.

6. Vehicle seat according to any one of Claims 3 to 5, **characterized in that** each groove (28) is covered by a biasing element, the tray (9) being engaged in each groove (28) by repelling said element.

7. Vehicle seat according to any one of Claims 1 to 6, **characterized in that** the fixing means (28) are formed so as to stow a tray (9) which is used as a support for a paper document and which has a retention clip (27) for said document.

8. Vehicle seat according to any one of Claims 1 to 7, **characterized in that** the tray (9) is stored in the backrest (3) of said seat (1) when it is in the storage mode.

9. Vehicle (50) which comprises a row of at least two seats (30, 31, 32), **characterized in that** it comprises at least one seat (1) according to any one of Claims 1 to 8.

10. Vehicle according to Claim 9, **characterized in that** it comprises a row of three seats (30, 31, 32), the central seat (31) of which is according to any one of Claims 1 to 9.
